# EUROPEAN PATENT SPECIFICATION

(11) **EP 3 746 276 B1**
(45) Date of publication and mention of the grant of the patent: **22.04.2026**
(21) Application number: 19704058.7
(22) Date of filing: 28.01.2019
(51) Int. Cl.: B27B 33/08, B23D 61/02

(54) **DIFFERENTIAL PITCH CLEARING SAW BLADE AND CLEARING SAW**
FREISCHNEIDERKLINGE MIT UNTERSCHIEDLICHER NEIGUNG UND FREISCHNEIDER
LAME DE DÉBROUSSAILLEUSE À PAS DIFFÉRENTIEL ET DÉBROUSSAILLEUSE

(30) Priority: 29.01.2018 SE 1850095
(43) Date of publication of application: 09.12.2020
(73) Proprietor: HUSQVARNA AB, 561 82 Huskvarna (SE)
(72) Inventor: HAGBERG, Albin, 55314 Jönköping (SE)
(86) International application number: PCT/SE2019/050057
(87) International publication number: WO 2019/147181

(56) References cited:
- EP-A1- 3 075 480
- WO-A1-2016/178307
- JP-A- 2000 102 902
- US-A- 4 436 009
- US-A1- 2006 271 231

## Description

### TECHNICAL FIELD

The present invention relates to a differential pitch clearing saw blade for cutting wood. The invention also relates to a wood-clearing saw comprising the differential pitch clearing saw blade.

### BACKGROUND

There are many different clearing saw blades for cutting wood available today. However, they suffer from a common problem called regenerative chatter. As the wood is cut by the saw blade, regenerative oscillation can happen. This means that the saw blade vibrates near a natural -frequency of the teeth that can cause the teeth of the blade to cut the wood at different widths as the cutting process continues, eventually ending up with streaks along the cut edge (wash boarding) that come from the cut being uneven in its width. This leads to higher energy consumption, wear on the saw blade, loss of teeth setting, heating of the blade and vibrations that can cause discomfort and injury for a user when operating a handheld saw such as a clearing saw. It would be desirable to provide a clearing saw blade that does not suffer from regenerative chatter. EP 3 075 480 A1 discloses a differential pitch circular saw blade having an alternate set wherein the saw blade comprises a number of teeth being a multiple of a tooth factor, the teeth being of equal length and wherein the teeth angled to a first side of the saw blade are arranged relative each other at a distance, and wherein the teeth angled to the opposite second side of the saw blade are shifted relative the teeth angled to the first side.

### SUMMARY

The present invention seeks to solve the problem of regenerative chatter, but also to mitigate other problems arising from vibrations and similar problems. According to a first aspect of the invention, the problem is solved by a wood-clearing saw blade being a differential pitch circular saw blade having an alternate set. The blade is characterized in that it comprises a number of teeth being a multiple of a tooth factor, the teeth being of equal length and wherein the teeth angled to a first side of the saw blade are arranged relative each other at a distance. Further, the maximum distance between two consecutive teeth angled to the first side is at least 1.15 times the minimum distance amin between two consecutive teeth angled to the first side and at the most 1.35 times the minimum distance amin between two consecutive teeth angled to the first side. Also, the teeth angled to the opposite second side of the saw blade are shifted relative the teeth angled to the first side.

The inventor of this patent application has, after careful and insightful reasoning, realized that by keeping the length of the teeth equal, the blade is simpler to manufacture and its characteristics are easier to determine. The inventor has also after further reasoning found that regenerative chatter is minimized at a reasonable rotation speed of the saw blade in use by limiting the maximum distance between two consecutive teeth relative to the minimum distance between two consecutive teeth. By using a blade with an alternating set of angled teeth, kerf will be thicker than the blade itself, thereby reducing friction and by shifting the angled teeth relative each other the blade is simpler to manufacture. Using an alternating set of angled teeth is generally considered beneficial, but has a problem in that regenerative chatter is known to degrade the setting of the teeth, meaning that recurring maintenance is required. This longstanding problem has been around since the first use of differential pitch saw blades with set teeth.

In one example embodiment, the teeth angled to the second side of the saw blade are arranged at the same relative distances to one another as the teeth angled to the first side.

This will balance the blade and make sure that both sets of teeth are cutting at optimal speeds for minimizing regenerative chatter.

In a second example embodiment, the shift between the teeth angled to the first side and the teeth angled to the second side corresponds to the sum of the maximum distance and the minimum distance, the sum being divided by four, with a margin of plus/minus 5, 10, 15, 0 to 5, 0 to 10, 0 to 15, 5 to 10, 5 to 15 or 10 to 15 percent.

This will further balance the blade by making sure that each tooth angled to the first side is roughly situated in the middle of two teeth angled to the second side, and vice versa. This will further balance the blade and make it easier to fit all of the teeth in order to simplify manufacturing. This will also enable the residual cut wood to more easily be removed, such as when transporting residuals from previous cuts. It also improves how the residual cut wood is removed from the teeth during cutting.

In another example embodiment, the tooth factor is four.

This means that the amount of teeth angled to one side is a multiple of two, which further helps with manufacturing and balancing.

In the next embodiment, the teeth angled to the first side are at one of two alternating distances to a consecutive tooth angled to the first side.

Alternating between two different distances is here intended to mean that a group of teeth angled to one side and being a multiple of two are distanced to each other so that the distance between the first and second tooth is A, the second and third is B, the third and fourth is A, the fourth and fifth is B and so on so that every second tooth in a sequence has one distance to the next tooth and another distance to the previous tooth and each other tooth in the sequence has the same two distances to the next/previous tooth, but the order is switched.

The inventor of this patent application has, after careful and insightful reasoning, realized that this alternation will minimize regenerative chatter.

In yet another example embodiment the teeth angled to the first side are partitioned in a first and a second subgroup, wherein the teeth in the first subgroup are at a same distance to the next tooth in the first subgroup and wherein the teeth in the second subgroup are at one of two alternating distances to a consecutive tooth in the second subgroup.

The inventor of this patent application has realized that these subgroups will further minimize regenerative chatter.

In one more example embodiment the teeth angled to the first side are partitioned in any number of subgroups, wherein the teeth in a subgroup are at one of any number of alternating distances to a consecutive tooth in the same subgroup and each subgroup have different sets of pitches between two consecutive teeth.

The different sets of pitches are to be interpreted as unique sets of any number of pitches greater than zero, where the case of a set of one pitch leads to a subgroup of equidistant teeth and the case of a set of more than two pitches leads to a sequence of teeth whose amount is a multiple of the number of pitches in the set and the distance between the teeth will follow a specific order from among the pitches in the set until all of the distances are used once, then the sequence may possibly be repeated.

This is a further generalization of the previous embodiment, since the inventor has found that several different amounts of subgroups and sets of pitches for subgroups have shown to reduce regenerative chatter.

In another example embodiment, at least 30% of all pitches are within 1.15 and 1.40 of the minimum distance.

The inventor of this patent application has realized that this will further reduce regenerative chatter.

In yet another example embodiment, at least 30% of all pitches are within 1 and 1.1 of the minimum distance.

The inventor of this patent application has realized that this will further reduce regenerative chatter.

According to a second aspect of this invention, a wood-clearing saw comprising a wood-clearing blade with some or all of the features above would provide a handheld saw without the problems associated with regenerative chatter.

A handheld saw is especially sensitive to regenerative chatter, as the vibrations caused by it can cause lasting damage to the user. This is further motivation for reducing the regenerative chatter in the present invention. In addition, for a handheld saw that is powered by another power source than a combustion engine, such as an electrically powered hand-held saw, the vibrations caused by the cutting equipment will become more prominent as in electrically powered hand-held saws the cutting equipment generate the bulk of the vibrations, not the power source, contrary to combustion powered saws. The teachings herein thus find particular use with electrically powered hand-held saws.

### BRIEF DESCRIPTION OF THE DRAWINGS

Having thus described the invention in general terms, reference will now be made to the accompanying drawings, which are not necessarily drawn to scale, and wherein:
Figure 1 illustrates a schematic view of a clearing saw blade with twelve teeth which are alternatingly set, according to an example embodiment.
Figure 2 illustrates a schematic view of a clearing saw blade with sixteen teeth which are alternatingly set, where only the eight angled to a first side is shown according to an example embodiment.
Figure 3 illustrates a schematic view of a clearing saw blade with eighteen teeth which are alternatingly set, where only the nine angled to a first side is shown according to an example embodiment.
Figure 4 illustrates a schematic view of a clearing saw blade with twenty-four teeth which are alternatingly set, according to an example embodiment.
Figure 5 illustrates a schematic view of a wood-clearing saw comprising a wood-clearing blade according to an example embodiment.

### DETAILED DESCRIPTION

The disclosed embodiments will now be described more fully hereinafter with reference to the accompanying drawings, in which certain embodiments are shown. This invention may, however, be embodied in many different forms and should not be construed as limited to the embodiments set forth herein; rather, these embodiments are provided by way of example so that this disclosure will be thorough and complete, and will fully convey the scope to those skilled in the art. Like numbers refer to like elements throughout, unless stated otherwise.

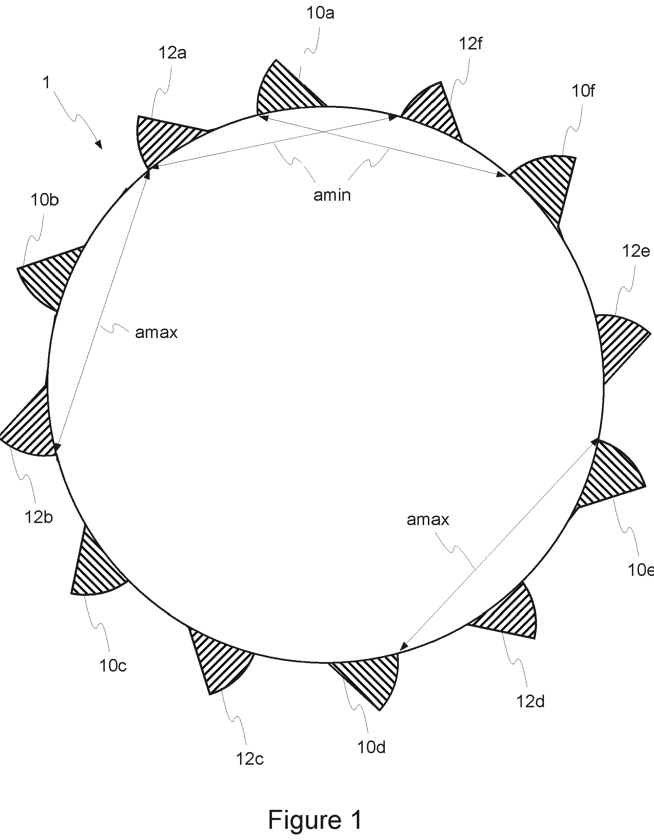

Figure 1 shows a circular clearing saw blade 1 with twelve teeth 10a-f, 12a-f which are alternatingly set. Half of the teeth are angled to a first side 10a-f of the blade and the other half is angled to a second side 12a-f. All of the teeth are of equal length and shape, the only variable parameter for the differential pitch of the blade is the distance between two consecutive teeth angled to the same side. In this embodiment, the teeth angled to the second side 12a-f of the blade are arranged at different relative distances to one another than the teeth angled to the first side 10a-f. The teeth angled to the second side 12a-f have a subgroup of five equidistant teeth 12b-f and one tooth that is shifted 12a so that it is closer to one tooth 12f, thereby creating a minimum distance amin between them and farther away from another tooth 12b, thereby creating a maximum distance amax between them. The teeth angled to the first side 10a-f have a subgroup of four equidistant teeth 10a-d and two shifted teeth 10e-f so that one of the shifted teeth 10f is closer to the next tooth 10a, thereby creating a minimum distance amin between them and another of the shifted teeth 10e is farther away from the previous tooth 10d, thereby creating a maximum distance amax between them.

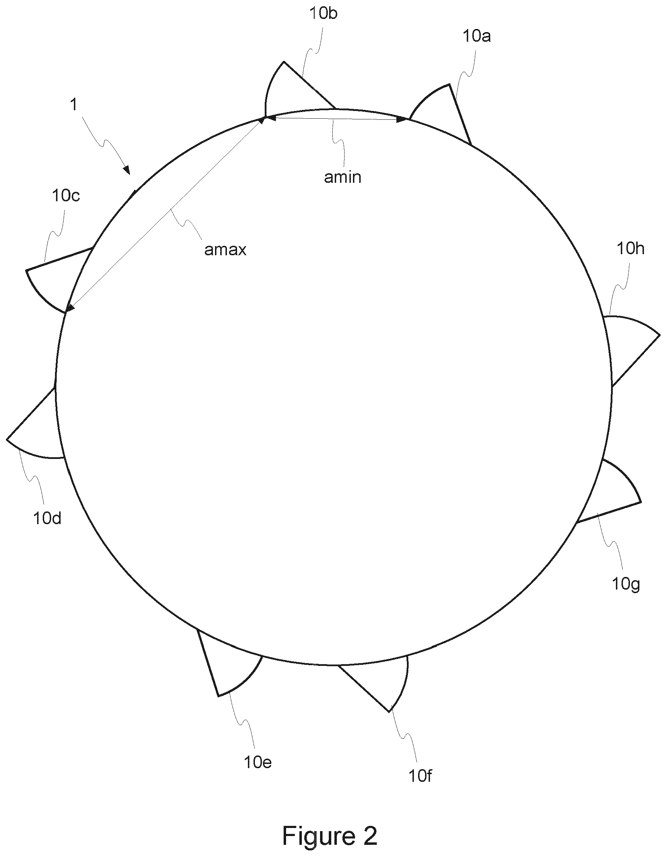

Figure 2 shows a circular clearing saw blade 1 with sixteen teeth which are alternatingly set, where only the teeth angled to a first side 10a-h are shown. These teeth alternate between two distances, a minimum amin and maximum amax distance, where every tooth has a minimum distance amin to the next or previous tooth and a maximum distance amax to the other of the previous or next tooth. The teeth angled to a second side (not shown) are shifted from the teeth shown 10a-h according to (*amax* + *amin*)/4 and may have the same relative distances to one another as the teeth angled to the first side, but may also not.

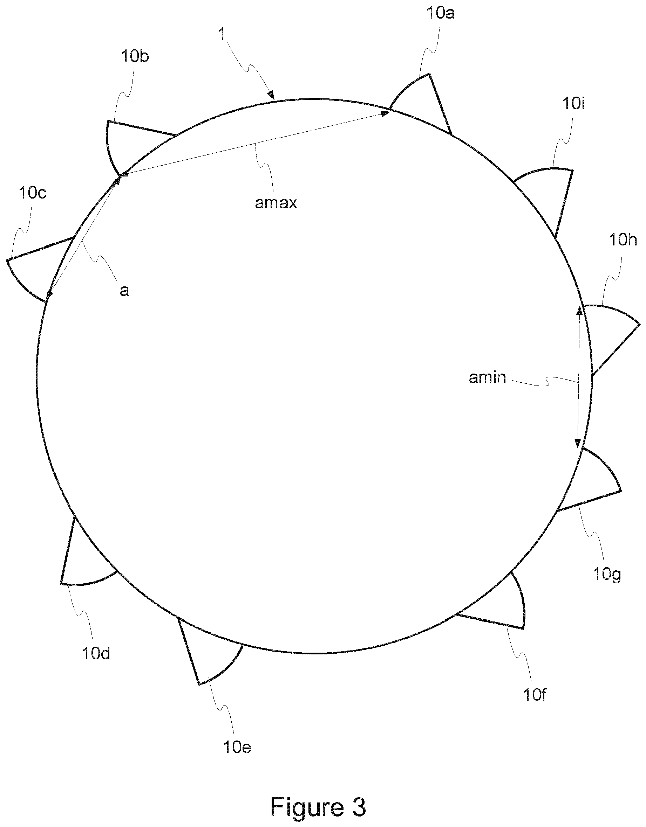

Figure 3 shows a circular clearing saw blade 1 with eighteen teeth which are alternatingly set, where only the teeth angled to a first side 10a-i are shown. These teeth are divided into two subgroups, a first subgroup 10a-10f with alternating distances a, amax between two consecutive teeth and a second subgroup 10g-i with one distance amin between two consecutive teeth. The teeth angled to a second side (not shown) may or may not be shifted from the teeth shown 10a-h according to (*amax* + *amin*)/4 and may or may not have the same relative distances to one another as the teeth angled to the first side.

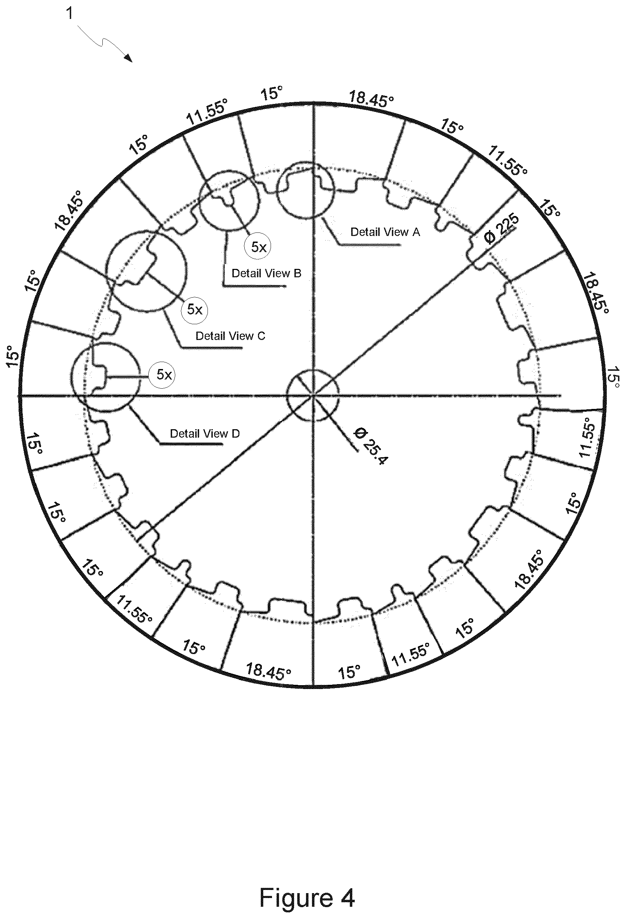

Figure 4 shows a circular clearing saw blade 1 with twenty-four teeth 10a-l, 12a-1 which are alternatingly set. Half of the teeth are angled to a first side 10a-1 and the other half is angled to a second side 12a-1. All of the teeth are of equal length and shape and the teeth angled to the second side of the saw blade are arranged at the same relative distances to one another as the teeth angled to the first side. The teeth angled to the first side alternate between two distances, a minimum amin (26.55°) and maximum amax (33.45°) distance, where every tooth has a minimum distance amin to the next or previous tooth and a maximum distance amax to the other of the previous or next tooth. The teeth angled to the second side of the saw blade are shifted (26.55° + 33.45°)/4 = 15° from the teeth angled to the first side.

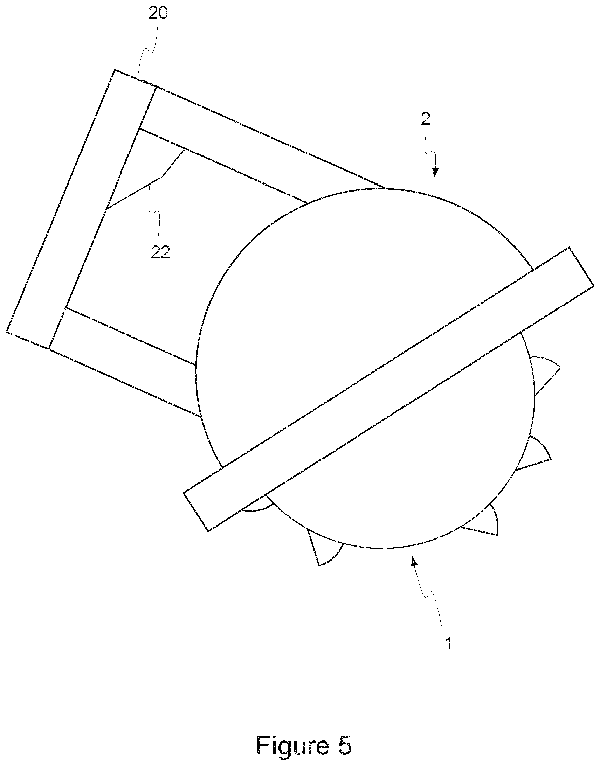

Especially in handheld saws, such as clearing saws, the vibrations and power consumption problems are of special concern. The sawblade of the present invention thus finds great use in handheld saws, such as the clearing saw of Figure 5. Figure 5 illustrates a clearing saw 2 with the circular clearing saw blade 1 of the present invention. The clearing saw 2 has a handle 20 for holding the saw and a trigger 22 for controlling the speed of the blade's rotation. This is merely one possible embodiment of the clearing saw, the handle may for example instead be a shaft and the trigger can be any type of actuator set. The clearing saw of the present invention may also have many other features that are not shown in Figure 5.

The clearing saw blade and the clearing saw itself has above only been described within the context of cutting wood, however the inventor has realized that concrete sawing also has similar problems with regenerative chatter. Therefore a clearing saw blade suitable for sawing wood is also suitable for sawing concrete. In this embodiment, reducing vibrations is especially beneficial as vibrations are a longstanding problem for handheld concrete sawing.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims.

## Claims

1. A wood-clearing saw blade (1) being a differential pitch circular saw blade having an alternate set wherein
the saw blade comprises a number of teeth (10a-l, 12a-l) being a multiple of a tooth factor (X), the teeth being of equal length and wherein
the teeth angled to a first side of the saw blade (10a-l) are arranged relative each other at a distance, wherein the maximum (amax) distance between two consecutive teeth angled to the first side is at least 1.15 times the minimum distance (amin) between two consecutive teeth angled to the first side and at the most 1.35 times the minimum distance (amin) between two consecutive teeth angled to the first side, and wherein
the teeth angled to the opposite second side of the saw blade (12a-l) are shifted relative the teeth angled to the first side (10a-l).

2. The wood-clearing saw blade of claim 1, wherein the teeth angled to the second side of the saw blade (12a-l) are arranged at the same relative distances to one another as the teeth angled to the first side (10a-l).

3. The wood-clearing saw blade of claim 1 or 2, wherein the shift between the teeth angled to the first side (10a-l) and the teeth angled to the second side (12a-l) corresponds to the sum of the maximum distance (amax) and the minimum distance (amin), the sum being divided by four, with a margin of plus/minus 5, 10, 15, 0 to 5, 0 to 10, 0 to 15, 5 to 10, 5 to 15 or 10 to 15 percent.

4. The wood-clearing saw blade of any previous claim, wherein the tooth factor (X) is 4.

5. The wood-clearing saw blade of any previous claim, wherein the teeth angled to the first side (10a-l) are at one of two alternating distances to a consecutive tooth angled to the first side.

6. The wood-clearing saw blade of any of claims 1 to 4, wherein the teeth angled to the first side (10a-l) are partitioned in a first and a second subgroup, wherein the teeth in the first subgroup are at a same distance to the next tooth in the first subgroup and wherein the teeth in the second subgroup are at one of two alternating distances to a consecutive tooth in the second subgroup.

7. The wood-clearing saw blade of any of claims 1 to 4, wherein the teeth angled to the first side (10a-l) are partitioned in any number of subgroups, wherein the teeth in a subgroup are at one of any number of alternating distances to a consecutive tooth in the same subgroup and each subgroup have different sets of pitches between two consecutive teeth.

8. The wood-clearing saw blade of any previous claim, wherein at least 30% of all pitches are within 1.15 and 1.35 of the minimum distance (amin).

9. The wood-clearing saw blade of any previous claim, wherein at least 30% of all pitches are within 1 and 1.1 of the minimum distance (amin).

10. A wood-clearing saw (2) comprising a wood-clearing saw blade (1) according to any of claims 1 to 9.

## Patentansprüche

1. Freischneiderblatt (1), das ein Kreissägeblatt mit differenzieller Zahnteilung mit einer abwechselnden Zahnstellung ist, wobei
das Sägeblatt eine Anzahl von Zähnen (10a-l, 12a-l) umfasst, die ein Vielfaches eines Zahnfaktors (X) sind, wobei die Zähne gleich lang sind und wobei
die zu einer ersten Seite des Sägeblatts (10a-l) abgewinkelten Zähne in einem Abstand zueinander angeordnet sind, wobei der maximale (amax) Abstand zwischen zwei aufeinanderfolgenden Zähnen, die zu der ersten Seite abgewinkelt sind, mindestens das 1,15-Fache des minimalen Abstands (amin) zwischen zwei aufeinanderfolgenden Zähnen, die zu der ersten Seite abgewinkelt sind, und höchstens das 1,35-Fache des minimalen Abstands (amin) zwischen zwei aufeinanderfolgenden Zähnen, die zu der ersten Seite abgewinkelt sind, beträgt, und wobei
die zu der gegenüberliegenden zweiten Seite des Sägeblatts (12a-l) abgewinkelten Zähne relativ zu den zu der ersten Seite (10a-l) abgewinkelten Zähnen verschoben sind.

2. Freischneiderblatt nach Anspruch 1, wobei die zu der zweiten Seite des Sägeblatts (12a-l) abgewinkelten Zähne in den gleichen relativen Abständen zueinander angeordnet sind wie die zu der ersten Seite (10a-l) abgewinkelten Zähne.

3. Freischneiderblatt nach Anspruch 1 oder 2, wobei die Verschiebung zwischen den zu der ersten Seite (10a-l) abgewinkelten Zähnen und den zu der zweiten Seite (12a-l) abgewinkelten Zähnen der Summe aus dem maximalen Abstand (amax) und dem minimalen Abstand (amin) entspricht, wobei die Summe durch vier geteilt ist, mit einem Spielraum von plus/minus 5, 10, 15, 0 bis 5, 0 bis 10, 0 bis 15, 5 bis 10, 5 bis 15 oder 10 bis 15 Prozent.

4. Freischneiderblatt nach einem der vorhergehenden Ansprüche, wobei der Zahnfaktor (X) 4 ist.

5. Freischneiderblatt nach einem der vorhergehenden Ansprüche, wobei die zu der ersten Seite (10a-l) abgewinkelten Zähne einen von zwei abwechselnden Abständen zu einem aufeinanderfolgenden, zu der ersten Seite abgewinkelten Zahn haben.

6. Freischneiderblatt nach einem der Ansprüche 1 bis 4, wobei die zu der ersten Seite (10a-l) abgewinkelten Zähne in eine erste und eine zweite Untergruppe unterteilt sind, wobei die Zähne in der ersten Untergruppe den gleichen Abstand zu dem nächsten Zahn in der ersten Untergruppe haben und wobei die Zähne in der zweiten Untergruppe einen von zwei abwechselnden Abständen zu einem aufeinanderfolgenden Zahn in der zweiten Untergruppe haben.

7. Freischneiderblatt nach einem der Ansprüche 1 bis 4, wobei die zu der ersten Seite (10a-l) abgewinkelten Zähne in eine beliebige Anzahl von Untergruppen unterteilt sind, wobei die Zähne in einer Untergruppe einen einer beliebigen Anzahl von abwechselnden Abständen zu einem aufeinanderfolgenden Zahn in derselben Untergruppe haben und jede Untergruppe unterschiedliche Sätze von Zahnteilungen zwischen zwei aufeinanderfolgenden Zähnen aufweist.

8. Freischneiderblatt nach einem der vorhergehenden Ansprüche, wobei mindestens 30% aller Zahnteilungen innerhalb von 1,15 und 1,35 des minimalen Abstands (amin) liegen.

9. Freischneiderblatt nach einem der vorhergehenden Ansprüche, wobei mindestens 30% aller Zahnteilungen innerhalb von 1 und 1,1 des minimalen Abstands (amin) liegen.

10. Freischneider (2), umfassend ein Freischneiderblatt (1) nach einem der Ansprüche 1 bis 9.

## Revendications

1. Lame de débroussailleuse (1) qui est une lame de scie circulaire à pas différentiel ayant un jeu alterné, la lame de scie comprenant un certain nombre de dents (10a-l, 12a-l) qui sont un multiple d'un facteur de dent (X), les dents étant de longueur égale et
les dents formant un angle par rapport à un premier côté de la lame de scie (10a-l) étant disposées les unes par rapport aux autres à une certaine distance, la distance maximale (amax) entre deux dents consécutives formant un angle par rapport au premier côté étant au moins égale à 1,15 fois la distance minimale (amin) entre deux dents consécutives formant un angle par rapport au premier côté et au plus égale à 1,35 fois la distance minimale (amin) entre deux dents consécutives formant un angle par rapport au premier côté, et
les dents formant un angle par rapport au second côté opposé de la lame de scie (12a-l) étant décalées par rapport aux dents formant un angle par rapport au premier côté (10a-l).

2. Lame de débroussailleuse selon la revendication 1, les dents formant un angle par rapport au second côté de la lame de scie (12a-l) étant disposées aux mêmes distances relatives les unes des autres que les dents formant un angle par rapport au premier côté (10a-l).

3. Lame de débroussailleuse selon la revendication 1 ou 2, le décalage entre les dents formant un angle par rapport au premier côté (10a-l) et les dents formant un angle par rapport au second côté (12a-l) correspondant à la somme de la distance maximale (amax) et de la distance minimale (amin), la somme étant divisée par quatre, avec une marge de plus/moins 5, 10, 15, 0 à 5, 0 à 10, 0 à 15, 5 à 10, 5 à 15 ou 10 à 15 pour cent.

4. Lame de débroussailleuse selon l'une quelconque des revendications précédentes, le facteur de dent (X) étant de 4.

5. Lame de débroussailleuse selon l'une quelconque des revendications précédentes, les dents formant un angle par rapport au premier côté (10a-l) étant à l'une de deux distances alternées par rapport à une dent consécutive formant un angle par rapport au premier côté.

6. Lame de débroussailleuse selon l'une quelconque des revendications 1 à 4, les dents formant un angle par rapport au premier côté (10a-l) étant réparties dans un premier et un second sous-groupe, les dents du premier sous-groupe étant à la même distance de la dent suivante dans le premier sous-groupe et les dents du second sous-groupe étant à l'une de deux distances alternées par rapport à une dent consécutive dans le second sous-groupe.

7. Lame de débroussailleuse selon l'une quelconque des revendications 1 à 4, les dents formant un angle par rapport au premier côté (10a-l) étant réparties dans un nombre quelconque de sous-groupes, les dents dans un sous-groupe étant à l'une quelconque de tout nombre de distances alternées d'une dent consécutive dans le même sous-groupe et chaque sous-groupe ayant des ensembles différents de pas entre deux dents consécutives.

8. Lame de débroussailleuse selon l'une quelconque des revendications précédentes, au moins 30 % de tous les pas étant compris entre 1,15 et 1,35 de la distance minimale (amin).

9. Lame de débroussailleuse selon l'une quelconque des revendications précédentes, au moins 30 % de tous les pas étant compris entre 1 et 1,1 de la distance minimale (amin).

10. Débroussailleuse (2) comprenant une lame de débroussailleuse (1) selon l'une quelconque des revendications 1 à 9.
